# EUROPEAN PATENT SPECIFICATION

(11) **EP 0 842 215 B1**
(45) Date of publication and mention of the grant of the patent: **13.10.1999**
(21) Application number: 96927668.2
(22) Date of filing: 02.08.1996
(51) Int. Cl.: C08J 5/12

(54) **JOINING OF POLYOLEFIN ARTICLES**
VERBINDUNG VON POLYOLEFINGEGENSTÄNDEN
RACCORDEMENT D'ARTICLES EN POLYOLEFINE

(30) Priority: 04.08.1995 GB 9516010
(43) Date of publication of application: 20.05.1998
(73) Proprietor: Uponor B.V., 1102 BR Amsterdam (NL)
(72) Inventor: HOVING, Lars, Goran, S-724 66 Vateras (SE)
(74) Representative: Lunt, Mark George Francis
(86) International application number: EP9603422
(87) International publication number: WO9706205

(56) References cited:
- EP-A- 0 329 350
- EP-A- 0 329 529
- DE-A- 2 026 193
- DE-B- 1 005 720
- FR-A- 2 112 807

## Description

This invention relates to a method of joining polyolefin articles, and more particularly to a method of joining polyolefin articles in which the surfaces of the articles are heated and joined under pressure.

Many methods have been proposed for the joining of polyolefin articles such as, for example, pipes, tubes, conduits and other hollow members. A particularly suitable method for joining uncross-linked polyolefin articles, comprising very similar or identical polyolefin compositions, is fusion bonding, in which the surfaces of the articles are heated to their fusion temperature and then pressed together to form a bond. This method is widely used, for example, in the butt welding of polyolefin pipes and in electrofusion couplers.

Substantial difficulties arise, however, where the polyolefin articles comprise a polyolefin of high molecular weight, and therefore low melt flow index, or where one or other of the polyolefin articles comprises a cross-linked polyolefin. In such circumstances, whilst an electrofusion coupler can still sometimes be used, as described in European Patent Application Number 0333379, butt welding using a standard butt welding machine is usually ineffective. The reason for this, as explained in European Patent Application Number 0329350, is that at the inner and outer surfaces of the weld, pronounced circumferential slit defects are present. The sharpness and location of these defects, which extend into the interface structure in the melt zone, weaken any such joint as is formed. The flaws involved are effectively infinitely sharp stress raising points.

Very many proposals have been made to overcome this problem. Special butt welding methods are described in European Patent Application Number 0329349 and in GB2207882. The use of a member of uncross-linked polymeric material, interposed between the surfaces to be joined, is described in DE2026193 and in European Patent Application Number 0329350. Cross-linking of the weld region to improve the strength of the weld is disclosed in GB1582078, DE3631082, and in JP58059020, JP58059019 and JP58059018.

In the latter Japanese patent publications, crosslinked polyolefin articles are joined by a method which comprises interposing a layer of cross-linkable polyolefin compound, comprising an organic peroxide and an antioxidant, between the surfaces of the crosslinked polyolefin products to be joined and heating and cross-linking the layer of cross-linkable polyolefin compound whilst holding the crosslinked polyolefin surfaces to be joined under pressure. As exemplified, this process requires the polyolefin articles to be held at temperatures of 200°C or above for periods of five to ten minutes, and it has been found in practice that these conditions can lead to severe distortion of the polyolefin articles.

In the method of European Patent Application Number 0329350, not only is it necessary to hold the pipe ends at a high temperature for a considerable period of time, but also the uncrosslinked third member interposed between the surfaces of the polyolefin articles is of substantial thickness, so that the joint region has a considerably lower strength than that of the crosslinked pipes.

According to the present invention, there is provided a method of joining by fusion bonding polyolefin articles (1,2) having a melt flow index of less than 0.2 in which method there is interposed between the surfaces to be joined a polyolefin element (3), characterised in that the surfaces of the articles are raised to the fusion temperature in a time of less than one minute, preferably between 10 and 30 seconds, and in that the polyolefin element is film of a thickness less than 50 microns and in that the articles are pipes and are butt welded with the film interposed between the ends of the pipe.

In another aspect, the invention provides an apparatus for joining polyolefin articles having a melt flow of less than 0.2, which apparatus comprises:
means for heating the surfaces of the polyolefin articles to a fusion temperature in a time of less than one minute;
carrier means for holding a polyolefin film of a thickness less than 50 microns interposed between the surfaces;
transport means for bringing the surfaces together with the film interposed between them;
clamping means for applying a clamping pressure between the polyolefin articles for a period of time sufficient to form a bond; and
wherein the articles are pipes and are butt welded with the film interposed between the ends of the pipe.

Polyolefin articles having a melt flow index of less than about 0.2, may comprise, for example, polyolefins of very high average molecular weight, for example, greater than 100,000, or crosslinked polyolefins, having a gel content of in excess of about 40%. The term melt flow index (MFI as used herein) has the meaning given by the test defined in British Standard BS2782 method 720A 1979: determination of melt flow rate for plastics under the conditions of 190°C and a load of 2.16 Kg, the rate of index being expressed in grams/10 minutes. Gel content in this specification is as determined by the method of ANSI/ASTMD 2765-68.

By the expression "fusion bonding" as employed herein is meant a process wherein the materials in the parts to be bonded together are caused to melt and flow, or to co-crystallise, to form the bond, as occurs, for example, in heat welding, or ultrasonic, infra-red or radio frequency energy, preferably with the application of pressure.

The polyolefin articles that can be joined by the method of the present invention can be similar or dissimilar and can comprise crosslinked or non-crosslinked polyolefins. Suitable polyolefins can comprise, for example, homopolymers and copolymers of alpha olefins which may be, for example, homopolymers and copolymers of ethylene, propylene, butene-1 or 4-methylpentene-1. Homopolymers and copolymers of substituted alpha olefins such as, for example, chlorinated polyethylenes, can also be used. Derivatives of alpha olefins comprising, for example, carboxylate or ester groups such as, for example, homopolymers of vinyl esters such as vinyl acetate or ethyl acrylate and copolymers of such monomers with other alpha olefins, for example, ethylene-vinyl acetate and ethylene-ethyl acrylate copolymers may also be used.

The method of the invention can be of particular application in the joining of crosslinked polyolefin articles, which may, for example, have a degree of cross-linking of greater than 60%, and often up to from 90 to 100% gel content. The crosslinked polyolefin articles can be manufactured by any suitable known method such as, for example, moulding or extrusion, and then crosslinked, either by chemical means, for example, using organic peroxides, or silane cross-linking, or by irradiation, for example, using ultraviolet radiation, electron beam irradiation, or gamma radiation.

In the method of the invention, the surfaces of the polyolefin articles to be joined are rapidly raised to the fusion temperature in a time which is insufficient to cause unacceptable distortion to the polyolefin articles. The surfaces can be prepared in the normal way, to remove dirt and oxidised material, and then heated, either by contacting the surfaces with a heated plate, for example, by the use of mirror plate heating, or by radiant energy, for example, infra-red heating. Infra-red heating is particularly preferred in many applications, as by this means it can be possible to heat a surface very rapidly without substantial conductive energy transfer rate loss or distortion from the heating source. Standard butt welding machines can be used for heating the surfaces to the fusion temperature, provided that they are capable of achieving the fusion temperature within the specified time. Preferably, the heating is localised to the surfaces of the articles, which are preferably raised to the fusion temperature in a time of less than 45 seconds, more preferably less than 30 seconds, especially from 10 to 30 seconds.

By the "fusion temperature" in this specification, is meant the temperature at which the polyolefin article melts and flows, or, if the polyolefin article is crosslinked, the temperature at which the polyolefin article would melt and flow if it were not crosslinked. The polyolefin article surfaces may be heated to different temperatures if desired.

Preferably the surfaces of the articles are heated to a temperature of from 150°C to 250°C, more preferably 175°C to 215°C.

The polyolefin film may be interposed between the surfaces to be joined either before, during, or after the heating step. Preferably, a polyolefin film is introduced between the surfaces, and the surfaces and the film are heated simultaneously. The surfaces can then be clamped together, with the film in between, and allowed to cool.

The polyolefin film can comprise any of the polyolefins mentioned hitherto, but is preferably uncrosslinked, or crosslinked only to a small extent, preferably to less than about 10% gel content. It is important that the surfaces of the polyolefin film should be substantially free of contamination, and if necessary, the film can be treated to remove any oxidised layer or dust contamination. Very thin polyolefin films are preferred, for example of thickness less than 20 microns, preferably from 5 to 15 microns.

The polyolefin film will, of course, be substantially melted or fused during the joining method, and it is preferred, therefore, for the polyolefin film to have a fusion temperature which is not substantially greater than the fusion temperature of the surfaces to be joined. Where the polyolefin articles to be joined each comprise the same polyolefin, it is preferred that the polyolefin film should also comprise the same polyolefin, although this is not essential in all cases. Polyethylene films have been found to be particularly suitable for joining crosslinked polyethylene pipes and for joining polyethylene to polypropylene pipes.

It is important that the polyolefin film is of a type that does not weaken the weld by oxidation or by stress cracking, and that it comprises a polyolefin which does not weaken substantially the mechanical properties of the joint. If desired, the film can comprise a modified polyolefin material, for example, an anhydride modified polyethylene, or the film can comprise a cross-linking agent which reacts during or after the fusion bonding step to cross-link the polyolefin film and, possibly, the adjacent surfaces of the polyolefin articles. The film can comprise a monolayer, or a laminated multilayer construction.

Modified polyolefin polymer films are particularly useful in joining polyolefin articles of dissimilar composition. Suitable modified polyolefins polymers include, for example, alpha olefin polymers and copolymers comprising up to 10% by weight of an ethylinically unsaturated carboxylic acid or an anhydride thereof, such as, for example, acrylic acid, maleic acid, itaconic acid, and succinic acid, or their anhydrides, as copolymer or graft copolymer components.

Cross-linking agents which can be admixed into the polyolefin film include, for example, organic peroxides, which may be used in an amount of from 0.1 to 0.6 parts per 100 parts polyolefin. Typical peroxides include, for example, dibutyl peroxide, dicumyl peroxide, 2,5-dimethyl-2,5 di-(t-butylperoxy)-hexene-3, 1,3-bis-(t-butylperoxy-iso-propyl)-benzene, and similar cross-linking agents.

The polyolefin film may contain an antioxidant, or conventional processing aids as desired.

The polyolefin film may be oriented or non-oriented, but where biaxially oriented films are used, these should preferably not shrink substantially during the fusion bonding process.

As previously mentioned, it is important to ensure that the surfaces of the film are clean. This can be achieved, for example, by appropriate surface treatment, or by the provision of "peel" layers which can be removed immediately before fusion bonding. Another possibility is to produce the film by injection moulding, since it has been found in practice that such methods are more likely to produce an acceptable fusion surface without the oxidised layers which are often formed by blown film extrusion processes.

Where the film has a multilayer structure, the opposed surface layers can comprise dissimilar polyolefin polymers which are compatible with the surfaces of the articles to be joined. This is particularly useful when bonding polyolefin articles comprising dissimilar polyolefin polymers, since the film can then be applied between the dissimilar surfaces such that each of the dissimilar article surfaces faces a similar film surface, thereby adding to the strength of the fusion bond. If desired, the film can be heated before it is applied to the surfaces of the polyolefin articles. The opposed surface layers of a multilayer film can be heated to different temperatures, as required.

After the surfaces have been joined, a clamping pressure can be applied if necessary for a period of time sufficient to achieve the desired bond. Pressures in the range of from about 0.02 MPa to 0.2 MPa are preferred, especially pressures from about 0.05 MPa to 0.1 MPa. The time for which the pressure is applied is preferably from about 30 seconds to about 2 minutes, especially from about 1 to 1.5 minutes, after which the joint region is allowed to cool, with or without removal of the clamping pressure. If necessary, a fluid coolant, such as air or water, may be used to promote more rapid cooling of the joint region.

An embodiment of an apparatus and a method according to the invention will now be described, by way of example only, with reference to the accompanying Drawing in which:

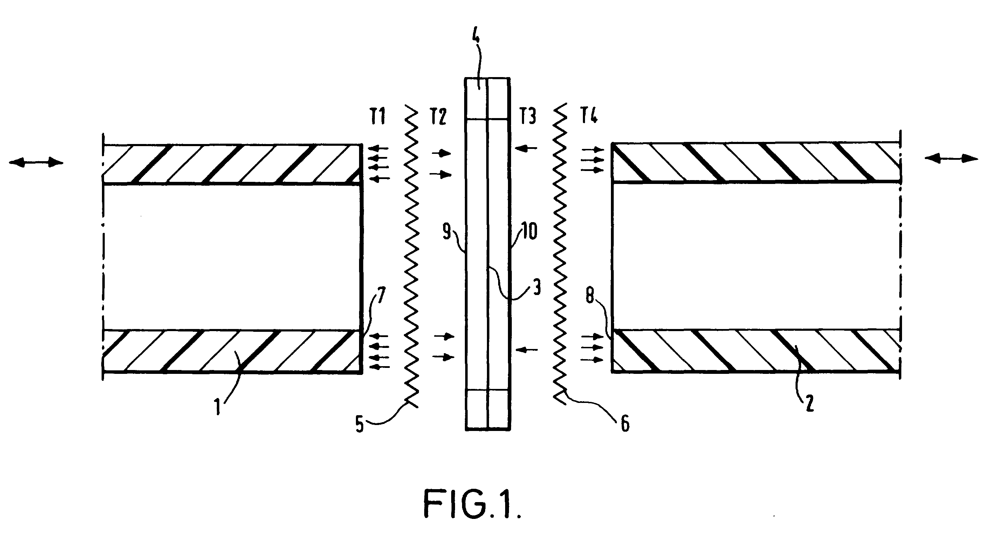

Figure 1 shows in diagrammatic sectional side elevation an apparatus for joining two polyolefin pipes.

Referring to Figure 1, there are shown pipe ends 1 and 2, the pipes being made from cross-linked polyethylene, which are supported in axial alignment by transport means (not shown). Interposed between the pipe ends 1, 2 is a film 3, formed from 10 micron thick uncross-linked polyethylene, which is supported by means of a film carrier 4.

Infra-red heaters 5 and 6 are positioned on each side of the film, between the film and the adjacent pipe end.

In the method of the invention, the end surfaces 7 and 8 of the pipe ends 1 and 2 are first cleaned and abraded to remove any contamination or oxidation and then moved into position as shown. The infra-red heat sources 5 and 6 are then energised, heating the surfaces 7 and 8 and the film 3. As indicated in Figure 1, the infra-red heat source 5 raises the surface 7 of the pipe end 1 to a temperature T1, and the surface 9 of the film 3 to a temperature T2. In a similar fashion, the infra-red heater 6 raises the surface 8 of the pipe end 2 to a temperature T4, and the surface 10 of the film 3 to a temperature T3. T1, T2, T3 and T4 can be the same or different. Any variations in temperature can be achieved by placing the surface to be heated at an appropriate distance from its adjacent heat source.

Where the film 3 is a monolayer, in this case a polyethylene film, T2 and T3 will usually be identical. Where the film has a laminate, multilayer construction, it may be desirable that T2 and T3 should be different temperatures.

When the surfaces 7, 8, 9 and 10 have reached the desired fusion temperatures, which occurs within 10 to 30 seconds, the infra-red heaters are removed and the pipe ends 1 and 2 moved axially by the transport means into contact with the film 3. The transport means applies a clamping pressure on the joint for about one minute, after which the pressure is removed and the joint is allowed to cool. It is found that a very strong butt joint is obtained, with substantially no distortion of the pipe ends.

## Claims

1. A method of joining by fusion bonding polyolefin articles (1, 2) having a melt flow index of less than 0.2 in which method there is interposed between the surfaces to be joined a polyolefin element (3), characterised in that the surfaces of the articles are raised to the fusion temperature in a time of less than one minute, preferably between 10 and 30 seconds, and in that the polyolefin element is film of a thickness less than 50 microns and in that the articles are pipes and are butt welded with the film interposed between the ends of the pipe.

2. A method according to Claim 1,
wherein the polyolefin articles each comprise a homopolymer or a copolymer of ethylene, propylene, butene-1 or 4-methylpentene-1.

3. A method according to claim 1 or 2, wherein the polyolefin articles are cross-linked, at least one of which is preferably cross-linked polyethylene.

4. A method according to any of the preceding claims, in which the surfaces of the articles are raised to the fusion temperature by infra-red heating.

5. A method according to any of the preceding claims, in which the surfaces of the polyolefin articles are heated to different temperatures.

6. A method according to any of the preceding claims, in which the surfaces of the polyolefin articles are heated to a temperature or temperatures of from 150° to 250°C.

7. A method according to any of the preceding claims, in which the polyolefin film is interposed between the surfaces of the articles to be joined, and the surfaces and the film are heated simultaneously.

8. A method according to any preceding claim, in which the polyolefin film comprises a homopolymer or a copolymer of ethylene, propylene, butene-1 or 4-methylpentene-1; and/or,
in which the polyolefin film is substantially uncross-linked; and/or
in which the polyolefin film has a thickness of less than 20 microns, preferably between 5 and 15 microns.

9. A method according to any of the preceding claims, wherein the polyolefin articles comprise crosslinked polyethylene and the polyolefin film comprises uncross-linked polyethylene.

10. A method according to any of the preceding claims, wherein the polyolefin articles are of dissimilar composition and the polyolefin element comprises a modified polyolefin polymer.

11. A method according to Claim 10, wherein the modified polyolefin polymer is an alpha olefin polymer or copolymer comprising up to 10% by weight of an ethylenically unsaturated carboxylic acid or an anhydride thereof.

12. A method according to any of the preceding claims, in which the polyolefin film comprises a cross-linking agent.

13. A method according to any of the preceding claims, in which the film is provided with clean surfaces, by appropriate surface treatment, by the provision of "peel" layers which are removable immediately before fusion bonding, or by producing the film using injection moulding techniques.

14. A method according to any of the preceding claims, in which the film has a laminated multilayer structure, the opposed surface layers comprising dissimilar polyolefin polymers which are compatible with the surfaces of the polyolefin articles to be joined.

15. A method according to any of the preceding claims, wherein the polyolefin articles are clamped together, with the polyolefin film in between, and wherein the clamping pressure is in the range of from 0.02 MPa to 0.2 MPa.

16. A method according to Claim 15, in which the clamping pressure is applied for a time of from 30 seconds to 2 minutes.

17. A method according to any of the preceding claims, in which the joint is allowed to cool, with or without removal of the clamping pressure.

18. An apparatus for joining polyolefin articles having a melt flow index of less than 0.2, which apparatus comprises:
means for heating the surfaces of the polyolefin articles to a fusion temperature in a time of less than one minute;
carrier means (4) for holding a polyolefin film of a thickness of less than 50 microns interposed between the surfaces;
transport means for bringing the surfaces together with the film interposed between them;
clamping means for applying a clamping pressure between the polyolefin articles for a period of time sufficient to form a bond; and
wherein the articles are pipes and are butt welded with the film interposed between the ends of the pipe.

19. An apparatus according to Claim 18, wherein the heating means comprises one or more infra-red heaters (5, 6).

## Patentansprüche

1. Verfahren zum Verbinden von Polyolefingegenständen (1, 2) mit einem Schmelzflußindex von weniger als 0,2 durch Schmelzverbinden, bei dem zwischen die zu verbindenden Oberflächen ein Polyolefinelement (3) gebracht wird, dadurch gekennzeichnet, daß die Oberflächen der Gegenstände in einer Zeitspanne von weniger als 1 Minute, vorzugsweise zwischen 10 und 30 Sekunden auf die Schmelztemperatur erwärmt werden, und das Polyolefinelement eine Folie mit einer Dicke von weniger als 50 µm ist, die Gegenstände Rohre sind und mit der zwischen den Enden der Rohre liegenden Folie stumpfverschweißt werden.

2. Verfahren nach Anspruch 1, bei dem die Polyolefingegenstände jeweils ein Homopolymer oder ein Copolymer von Ethylen, Propylen, Buten-1 oder 4-Methylpenten-1 umfassen.

3. Verfahren nach Anspruch 1 oder 2, bei dem die Polyolefingegenstände vernetzt sind, wobei mindestens einer davon vorzugsweise vernetztes Polyethylen ist.

4. Verfahren nach einem der vorhergehenden Ansprüche, bei dem die Oberflächen der Gegenstände durch Infrarotheizen auf die Schmelztemperatur erwärmt werden.

5. Verfahren nach einem der vorhergehenden Ansprüche, bei dem die Oberflächen der Polyolefingegenstände auf unterschiedliche Temperaturen erwärmt werden.

6. Verfahren nach einem der vorhergehenden Ansprüche, bei dem die Oberflächen der Polyolefingegenstände auf eine Temperatur oder auf Temperaturen von 150 bis 250 °C erwärmt werden.

7. Verfahren nach einem der vorhergehenden Ansprüche, bei dem die Polyolefinfolie zwischen die Oberflächen der verbindenden Gegenstände gebracht wird und die Oberflächen und die Folie gleichzeitig erwärmt werden.

8. Verfahren nach einem der vorhergehenden Ansprüche, bei dem die Polyolefinfolie ein Homopolymer oder ein Copolymer von Ethylen, Propylen, Buten-1 oder 4-Methylpenten-1 ist und/ oder
die Polyolefinfolie im wesentlichen unvernetzt ist und/oder
die Polyolefinfolie eine Dicke von weniger als 20 µm, vorzugsweise zwischen 5 und 15 µm aufweist.

9. Verfahren nach einem der vorhergehenden Ansprüche, bei dem die Polyolefingegenstände vernetztes Polyethylen umfassen und die Polyolefinfolie unvernetztes Polyolefin umfaßt.

10. Verfahren nach einem der vorhergehenden Ansprüche, bei dem die Polyolefingegenstände eine unterschiedliche Zusammensetzung aufweisen und das Polyolefin element ein modifiziertes Polyolefinpolymer umfaßt.

11. Verfahren nach Anspruch 10, bei dem das modifizierte Polyolefinpolymer ein α-Olefinpolymer oder -copolymer ist, das bis zu 10 Gew.-% einer ethylenisch ungesättigten Carbonsäure oder deren Anhydrid umfaßt.

12. Verfahren nach einem der vorhergehenden Ansprüche, bei dem die Polyolefinfolie ein Vernetzungsmittel umfaßt.

13. Verfahren nach einem der vorhergehenden Ansprüche, bei dem die Folie durch geeignete Oberflächenbehandlung mit sauberen Oberflächen bereitgestellt wird, indem "Abzieh"-Schichten bereitgestellt werden, die unmittelbar vor dem Schmelzverbinden entfernbar sind, oder die Folie unter Anwendung von Spritzgießverfahren hergestellt wird.

14. Verfahren nach einem der vorhergehenden Ansprüche, bei dem die Folie eine laminierte Mehrschichtenstruktur aufweist, wobei die entgegengesetzten Oberflächenschichten unterschiedliche Polyolefinpolymere umfassen, die mit den Oberflächen der zu verbindenden Polyolefingegenstände kompatibel sind.

15. Verfahren nach einem der vorhergehenden Ansprüche, bei dem die Polyolefingegenstände mit der dazwischenliegenden Polyolefinfolie zusammengepreßt werden, wobei der Spanndruck 0,02 MPa bis 0,2 MPa beträgt.

16. Verfahren nach Anspruch 15, bei dem der Spanndruck für eine Zeitspanne von 30 Sekunden bis 2 Minuten ausgeübt wird.

17. Verfahren nach einem der vorhergehenden Ansprüche, bei dem die Verbindung mit oder ohne Aufhebung des Spanndrucks abkühlen gelassen wird.

18. Vorrichtung zum Verbinden von Polyolefingegenständen mit einem Schmelzflußindex von weniger als 0,2, die
Mittel zum Aufheizen der Oberflächen der Polyolefingegenstände auf eine Schmelztemperatur in einer Zeitspanne von weniger als 1 Minute,
Trägermittel (4) zum Halten einer zwischen die Oberflächen gebrachten Polyolefinfolie mit einer Dicke von 50 µm,
Transportmittel zum Zusammenfügen der Oberflächen mit der dazwischenliegenden Folie und
Spannmittel zur Ausübung eines Spanndrucks zwischen den Polyolefingegenständen über eine ausreichende Zeitspanne zur Bildung einer Bindung umfaßt,
wobei die Gegenstände Rohre sind und mit der zwischen den Enden der Rohre liegenden Folie stumpfverschweißt werden.

19. Vorrichtung nach Anspruch 18, bei der die Heizmittel einen oder mehrere Infrarotheizer (5, 6) umfassen.

## Revendications

1. Méthode d'assemblage par raccordement par fusion d'articles (1, 2) en polyoléfines ayant un indice de fluidité à l'état fondu inférieur à 0,2, dans laquelle un élément (3) en polyoléfine est interposé entre les surfaces à assembler, ladite méthode étant caractérisée en ce que les surfaces des articles sont portées à la température de fusion en une durée inférieure à une minute, de préférence entre 10 et 30 secondes, en ce que l'élément en polyoléfine est un film d'épaisseur inférieure à 50 microns, et en ce que les articles sont des tuyaux et sont soudés bout à bout avec le film interposé entre les extrémités desdits tuyaux.

2. Méthode selon la revendication 1 caractérisée en ce que les articles en polyoléfines comprennent chacun un homopolymère ou un copolymère d'éthylène, de propylène, de butène-1 ou de 4-méthylpentène-1.

3. Méthode selon la revendication 1 ou 2, caractérisée en ce que les articles en polyoléfines sont réticulés, l'un au moins d'entre eux étant en polyéthylène réticulé.

4. Méthode selon l'une quelconque des revendications précédentes, caractérisée en ce que les surfaces des articles sont portées à la température de fusion par chauffage infrarouge.

5. Méthode selon l'une quelconque des revendications précédentes, caractérisée en ce que les surfaces des articles en polyoléfines sont chauffées à des températures différentes.

6. Méthode selon l'une quelconque des revendications précédentes, caractérisée en ce que les surfaces des articles en polyoléfines sont chauffées à une température ou à des températures comprise(s) entre 150° et 250°C.

7. Méthode selon l'une quelconque des revendications précédentes, caractérisée en ce que le film en polyoléfine est interposé entre les surfaces des articles à assembler et en ce que les surfaces et le film sont chauffés simultanément.

8. Méthode selon l'une quelconque des revendications précédentes, caractérisée en ce que :
• le film en polyoléfine comprend un homopolymère ou un copolymère de l'éthylène, du propylène, du butène-1 ou des 4-méthylpentène-1; et/ou
• le film en polyoléfine est essentiellement non réticulé ; et/ou
• le film en polyoléfine a une épaisseur de moins de 20 microns, de préférence entre 5 et 15 microns.

9. Méthode selon l'une quelconque des revendications précédentes, caractérisée en ce que les articles en polyoléfine comprennent du polyéthylène réticulé et le film en polyoléfine comprend du polyéthylène non réticulé.

10. Méthode selon l'une quelconque des revendications précédentes, caractérisée en ce que les articles en polyoléfine sont de compositions non similaires et en ce que l'élément en polyoléfine comprend un polymère de type polyoléfine modifié.

11. Méthode selon la revendication 10, caractérisé en ce que le polymère de type polyoléfine modifié est un polymère ou un copolymère d'une α-oléfine comprenant plus de 10 % en poids d'un acide carboxylique éthyléniquement insaturé ou d'un anhydride dudit acide carboxylique.

12. Méthode selon l'une quelconque des revendications précédentes, caractérisée en ce que le film en polyoléfine comprend un agent de réticulation.

13. Méthode selon l'une quelconque des revendications précédentes, caractérisée en ce qu'on s'assure que le film dispose de surfaces propres par un traitement de surface approprié, par la mise en place de couches "pelables" qu'il est possible de retirer juste avant le raccordement par fusion, ou en produisant le film en utilisant des techniques d'injection par moulage.

14. Méthode selon l'une quelconque des revendications précédentes, caractérisée en ce que le film possède une structure multicouches stratifiée, les deux surfaces opposées comprenant des polymères non similaires, lesdits polymères étant compatibles avec les surfaces des articles en polyoléfine à assembler.

15. Méthode selon l'une quelconque des revendications précédentes, caractérisée en ce que les articles en polyoléfine sont mis sous presse avec le film en polyoléfine entre eux et où la pression de serrage est de l'ordre de 0,02 MPa à 0,2 MPa.

16. Méthode selon la revendication 15, caractérisée en ce que la pression de serrage est appliquée pendant une durée de 30 secondes à 2 minutes.

17. Méthode selon l'une quelconque des revendications précédentes, caractérisée en ce qu'on laisse le joint refroidir en supprimant ou non la pression de serrage.

18. Appareil pour l'assemblage d'articles en polyoléfine ayant un indice de fluidité à l'état fondu inférieur à 0,2, ledit appareil comprenant :
• des moyens permettant de porter les surfaces des articles en polyoléfines à la température de fusion en une durée inférieure à une minute ;
• des moyens de support (4) permettant de maintenir un film en polyoléfine d'une épaisseur de moins de 50 microns interposé entre les surfaces.
• des moyens de serrage pour appliquer une pression de serrage entre les articles en polyoléfine durant une période suffisante pour former un raccord ; et
caractérisé en ce que les articles sont des tuyaux et sont soudés bout à bout avec le film interposé entre les extrémités desdits tuyaux.

19. Appareil selon la revendication 18, caractérisé en ce que les moyens de chauffage comprennent au moins un dispositif de chauffage infra-rouge.
